(19) Europäisches Patentamt

European Patent Office

Office européen des brevets

(11) **EP 0 592 304 B2**

(12) **NOUVEAU FASCICULE DE BREVET EUROPEEN**

(45) Date de publication et mention de la décision concernant l'opposition:
**02.11.2000 Bulletin 2000/44**

(45) Mention de la délivrance du brevet:
**16.04.1997 Bulletin 1997/16**

(21) Numéro de dépôt: **93402447.2**

(22) Date de dépôt: **05.10.1993**

(51) Int. Cl.7: **A23C 19/068**, A23C 19/16, A23C 19/032

(54) **Procédé de fabrication de fromage**

Verfahren zur Herstellung von Käse

Process for preparing cheese

(84) Etats contractants désignés:
**AT BE CH DE DK ES FR GB IT LI LU NL SE**

(30) Priorité: **09.10.1992 FR 9212055**

(43) Date de publication de la demande:
**13.04.1994 Bulletin 1994/15**

(73) Titulaire: **FROMAGERIES BEL**
**75008 Paris (FR)**

(72) Inventeurs:
• **Delespaul, Gilbert**
**F-41100 Vendome (FR)**
• **Leclerc, Guy**
**F-41100 St. Ouen (FR)**
• **Lepeltier, Michel**
**F-41100 Vendome (FR)**

• **Chassagne, Marie-Hélène**
**F-41100 Marcilly en Beauce (FR)**

(74) Mandataire: **Polus, Camille et al**
**c/o Cabinet Lavoix**
**2, Place d'Estienne d'Orves**
**75441 Paris Cedex 09 (FR)**

(56) Documents cités:
**EP-A- 0 240 607**          **EP-A- 0 501 891**

• **MILCHWISSENSCHAFT vol. 46, no. 7, 1991, MÜNCHEN DE page 468 A. REPS ET AL. 'Zur Beurteilung der Eignung von Vinylpolyacetat für den Schutz der Oberfläche von Käsen'**
• **Le fromage Edition Lavoisier, 1987, p. 241-245**

EP 0 592 304 B2

## Description

La présente invention a pour objet un procédé de fabrication de fromages à pâte pressée à ouvertures dans la pâte.

On trouve dans le commerce des fromages à pâte pressée à ouverture régulière et développée, du type Emmental, Gruyère, Maasdamer ; ces produits se présentent sous forme de meules de grandes dimensions, de 700 à 1000 mm de diamètre, de 130 à 250 mm de hauteur et d'un poids de 60 à 130 kg. On a vu également apparaître sur le marché des meules plus petites de 2 à 10 kg.

Dans ce type de produit, l'ouverture est réalisée par une fermentation propionique selon le processus suivant : les bactéries propioniques forment de l'acide propionique, de l'acide acétique et du $CO_2$, lequel se dissout dans la pâte jusqu'à saturation et lorsque celle-ci est atteinte, des bulles de gaz apparaissent, provoquant des trous dans la pâte. Cette fermentation est anaérobie ; elle se produit au cours d'un affinage qui est très long (de 4 à 6 mois) et qui se fait successivement par un séjour en cave froide à 5-15°C pendant 2 à 3 semaines, puis par un séjour en cave chaude à 18-22°C, ce qui favorise le développement des ferments propioniques et la formation d'ouvertures.

Dans le cas des produits gros formats, il est nécessaire de maintenir les fromages en cave chaude pendant au moins 1 à 3 mois pour obtenir des ouvertures.

Le fermentation propionique est alors stoppée par passage en cave froide jusqu'à commercialisation du produit.

De façon générale, la formation de l'ouverture est moins rapide à la périphérie qu'au centre.

Il serait par ailleurs intéressant d'offrir au consommateur des fromages de petit format à pâte pressée, à texture souple et fondante et à ouvertures dans la pâte, plus spécifiquement des fromages de poids inférieur à 500 g vendus à la pièce.

Toutefois, la fabrication de ces produits nécessite la mise au point d'une technologie spécifique, la technologie appliquée aux fromages de grand format n'étant pas transposable telle quelle aux fromages de petit format.

En effet, la fabrication de ces produits de petit format s'accompagne de contraintes technologiques plus importantes que pour les fromages de format traditionnel, qui sont notamment les suivantes :

- l'extrait sec des produits de petit format est plus faible (53-58% contre une teneur de plus de 60%), ce qui entraîne une protéolyse plus rapide de la pâte au cours de l'affinage, et par voie de conséquence une moindre tenue des fromages en cours d'affinage et de commercialisation, et une durée de conservation plus faible ;
- il ne doit pas y avoir formation d'une véritable croûte, fortement desséchée, qui serait inacceptable pour le consommateur, compte tenu du format ;
- les durées d'affinage doivent être réduites à 2-3 semaines ;
- en outre, il est difficile de mettre en oeuvre des températures d'étuvage élevées (supérieures à 23°C) sans générer des défauts de surface préjudiciables au goût, à l'aspect et à la conservation du produit.

Dans ces conditions, l'obtention de l'ouverture propionique régulière (nombre et taille des ouvertures) est délicate, car le $CO_2$ risque d'être mal retenu par la pâte si la fermentation propionique ne démarre pas très rapidement, notamment avant que la protéolyse ne conduise à une pâte plus poreuse laissant diffuser le $CO_2$ vers l'extérieur.

De nombreuses techniques ont été essayées pour permettre l'obtention d'ouvertures régulières dans de petits formats : on a ainsi tenté de modifier les conditions de pasteurisation du lait, la quantité de présure, l'ampleur du délactosage, la température de pressage, d'augmenter la quantité de bactéries propioniques, de sélectionner des bactéries propioniques plus performantes, d'enrober les produits avec une matière plastique thermoformée imperméable retenant les gaz à l'intérieur. Aucun de ces procédés n'a donné de résultats satisfaisants.

Ainsi, le brevet EP 0 240 607 décrit un procédé de fabrication de tels produits par ajout au lait de microorganismes de l'espèce _Lactobacillus fermentum_ à raison de $10^4$ à $10^7$ germes/ml de lait et affinage du produit sous film imperméable ou sous surpression d'air ou de $CO_2$, afin d'éviter toute fuite du $CO_2$ de la pâte vers l'extérieur et permettre l'obtention d'ouvertures régulières suffisamment nombreuses.

Toutefois, l'application de cette technique entraîne de sérieux défauts de qualité des produits ; en effet, il se produit des phénomènes de condensation entre le produit et l'emballage qui sont source de défauts de conservation et de goût.

Ainsi, sous l'enrobage imperméable, le gaz diffuse dans la pâte et au travers de la surface du fromage, provoquant l'apparition de cratères à la surface et le décollement de l'enrobage.

Par ailleurs, EP-A-0 501 891 décrit un procédé d'obtention de produits fromagers à pâte pressée cuite dans lequel des produits moulés traditionnels, sous forme de meules de gros format, sont enveloppés d'une pellicule perméable aux gaz, pour former une croûte poreuse.

De façon totalement inattendue, la demanderesse a trouvé qu'en réalisant de façon particulière certaines étapes de fabrication du produit, notamment l'affinage, on n'avait pas besoin de recourir aux techniques enseignées par l'art antérieur pour obtenir des ouvertures régulières dans la pâte de fromages, de poids essentiellement inférieur à 500 g.

L'invention a ainsi pour objet un procédé de fabrication d'un fromage de poids inférieur à 500 g, présentant dans la pâte des ouvertures obtenues par fermentation propionique, dans lequel on pasteuriseun lait standardisé en matière grasse, on l'ensemence avec des ferments lactiques et au moins une souche de bactéries propioniques, on l'emprésure pour obtenir un caillé et du lactosérum, on découpe et brasse le caillé obtenu, on soutire le lactosérum, on moule et presse le caillé dans les moules, on démoule le fromage, le sale et l'affine, caractérisé en ce que l'on ajoute au lait de fabrication avant emprésurage une quantité efficace pour obtenir une fermentation de lactobacilles de l'espèce *Lactobacillus reuteri*, avant l'affinage l'on entoure ledit fromage avec un film essentiellement perméable aux gaz et l'on effectue l'affinage successivement en cave froide à une température de 8 à 14° C, puis en cave chaude à une température de 18 à 23° C.

Les ouvertures obtenues par fermentation propionique ont une dimension de l'ordre du petit pois à la grosse noisette, c'est-à-dire présentent un diamètre allant d'environ 2 à 3 mm à environ 10 mm.

Par perméabilité aux gaz, on entend que le film assure les échanges d'oxygène, gaz carbonique et $CO_2$ entre le fromage et le milieu ambiant.

Avantageusement, le film perméable aux gaz est constitué de polystyrène, polyacétates, d'une cire animale, végétale, minérale et/ou de paraffine ou de dérivés de corps gras tels que par exemple les acétoglycérides, ou d'un mélange de ces composés.

De préférence, le film est constitué de polyacétate de vinyle et a une épaisseur comprise entre 20 et 80 μm.

De manière avantageuse, l'affinage est effectué successivement en cave froide à une température de 8°C à 14°C et une humidité relative d'environ 98% pendant 8 à 10 jours, puis en cave chaude à une température de 18°C à 23°C et une humidité relative d'environ 85% pendant 7 à 14 jours, l'affinage en cave chaude étant effectué dans des claies alvéolées pleines, qui limitent la perte en gaz et aident au maintien de la forme du fromage.

Avantageusement, après l'affinage, on réalise un ressuyage de la surface du fromage ; cette étape s'effectue à 10-15°C et à une humidité relative d'environ 85%. On entend par ressuyage un séchage superficiel du produit. Cette opération a pour but d'éliminer l'humidité résiduelle à la surface du produit avant emballage final ; elle peut être effectuée en cave, passage sous tunnel, etc...

On a découvert de manière inattendue que les lactobacilles de l'espèce *Lactobacillus reuteri* sont capables de se développer précocement dans ce type de fromages et de produire du $CO_2$ sous forme de microbulles à partir du lactose.

Ces microbulles apparaissent dès les premiers jours de l'affinage en cave froide, ce qui permet d'obtenir une saturation de la pâte en $CO_2$ dès le passage en cave froide et favorise la formation ultérieure de l'ouverture propionique, les microbulles constituant une amorce à la formation de ces ouvertures.

Ainsi, l'utilisation de *Lactobacillus reuteri* permet une activité plus intense des ferments propioniques, une ouverture propionique plus précoce, et des ouvertures de taille homogène mieux réparties au sein du fromage.

L'espèce *Lactobacillus reuteri* est définie selon le BERGEY'S (BERGEY'S Manual of Systematic Bacteriology, vol. 2, Edition 1986, p. 1233) par les caractéristiques suivantes :

- production d'acide D-L-lactique,
- absence de culture à 15°C (tendance à un caractère thermophile)
- croissance + à 45°C,
- production de $NH_3$ à partir d'arginine,
- mobilité électrophorétique $\frac{D-LDH = 1,74}{D-LDH = 0,88}$
- profil de fermentation des sucres avec mannose
- peptidoglycane de type LYS-D-ASP.

Une souche de *Lactobacillus reuteri* (EE24) particulièrement avantageuse est la souche déposée à la Collection Nationale de Culture de Microorganismes le 24 Septembre 1992 sous le n°I. 1269.

L'utilisation de *Lactobacillus reuteri* permet d'obtenir non seulement de bons résultats avec des fromages tels que définis selon l'invention, mais également et de manière plus générale avec tous types de fromages à ouvertures obtenues par fermentation propionique.

Avantageusement, la quantité de *Lactobacillus reuteri* ajoutée au lait avant emprésurage est comprise entre environ $10^4$ et $10^7$ CFU/ml (CFU : unités formatrices de colonies).

Pour la mise on oeuvre du procédé de l'invention, on utilise un lait standardisé on matières grasses, pasteurisé à 63°C-90°C pendant une durée de quelques secondes à 30 minutes et soumis à maturation avec des ferments traditionnels de fromagerie et une souche quelconque de bactéries propioniques disponible dans le commerce.

On ajoute alors au lait à cette étape de la fabrication une quantité efficace de *Lactobacillus reuteri.*

Le lait ensemencé est alors emprésuré dans les conditions habituelles, puis après coagulation et décaillage, le caillé délactosé est moulé, pressé, démoulé, salé pour trempage dans une saumure à environ 12°C pendant une heure.

Le caillé salé est alors enduit d'un film perméable comme défini ci-dessus et affiné en cave froide dans des claies traditionnelles, puis en cave chaude dans des claies à alvéoles, comme mentionné précédemment.

Pour permettre l'obtention d'un film perméable aux gaz, il est nécessaire de déposer un film relativement mince d'une épaisseur comprise

avantageusement entre 20 μm et 80 μm.

Le film peut être déposé par tout procédé permettant l'obtention d'un film mince, notamment par pulvérisation de la matière constituant le film sur la surface du fromage.

Pour un film en polyacétate de vinyle, la perméabilité à l'oxygène, mesurée selon la méthode ASTM D 3985, et la perméabilité à la vapeur, mesurée selon la norme NF 00030, sont respectivement de 400 000 $cm^3/m^2$ pour 24 heures et de 900 $g/m^2$ pour 24 heures pour un film de 74 μm d'épaisseur. Les films employés permettent ainsi l'échange gazeux entre le fromage et son environnement et n'ont, contrairement à l'état de la technique, aucune fonction de rétention du $CO_2$ à l'intérieur de la pâte.

A la fin du cycle d'affinage, et avant emballage final et stockage au froid, le produit obtenu est avantageusement soumis à un ressuyage en cave à une température de 13°C et une humidité relative d'environ 85% pendant 7 à 12 heures, de préférence 8 à 10 heures.

Il est ensuite recouvert d'un revêtement protecteur de polyacétate de vinyle de type Superdex ®, d'une cire minérale, végétale, animale, de paraffine ou de dérivés des corps gras tels que les acétoglycérides, ou d'un mélange de ces composés.

Il peut ensuite être conditionné sous un film de cellophane ou autre matériau approprié au conditionnement.

Les fromages obtenus selon l'invention se présentent sous forme de meules, d'un poids inférieur à 500 g, pouvant aller jusqu'à 20 ou 30 g, et ont des ouvertures bien réparties dans la pâte ; ils sont de préférence de forme sphérique, demi-sphérique, cylindrique, demi-cylindrique, etc...

L'invention sera illustrée à l'aide des exemples suivants :

Exemple de référence

On part d'un lait maturé pasteurisé à 74°C pendant 30 secondes, standardisé à 34 g/l, ensemencé par un mélange de souches de ferments lactiques traditionnels de fromagerie et d'une souche de bactéries propioniques, puis emprésuré ; après coagulation, le coagulum obtenu est tranché, brassé, pressé, puis chauffé à 39°C pendant 30 minutes.

Le lactosérum est alors soutiré et le caillé obtenu est moulé, puis pressé, acidifié, puis démoulé, saumuré; il est alors enduit par pulvérisation d'un film en polyacétate de vinyle de 30 μm d'épaisseur, affiné :

- en cave froide à 13°C et 98% d'humidité relative pendant 9 jours,
- en cave chaude dans des claies alvéolées à 20°C et 85% d'humidité relative pendant 12 jours, puis un ressuyage superficiel du fromage est effectué par passage en cave sèche pendant environ 6 heures à 13°C et 85% d'humidité relative.

Il est alors enduit d'une deuxième couche de polyacétate de vinyle avant emballage final sous un film de polypropylène. Les fromages obtenus montrent des ouvertures régulières dans la pâte de la grosseur d'un petit pois ; ainsi, pour un fromage de 250 g, on obtient à la coupe environ 3 à 5 ouvertures, une texture souple et goût fruité caractéristique des fromages à pâtes pressées cuites.

Exemple 1

On part d'un lait maturé, pasteurisé à 74°C pendant 30 secondes, standardisé à 34 g/l de matière grasse, ensemencé par un mélange de ferments lactiques traditionnels de fromagerie, d'une souche de bactérie propionique et d'une quantité de $10^5$ CFU/ml de la souche de _Lactabacillus reuteri_ déposée à la CNCM le 24 Septembre 1992 sous le numéro I. 1269 ; le lait ensemencé est alors emprésuré, puis le coagulum obtenu est traité selon les conditions de l'Exemple de référence. Après affinage complet, le produit est enrobé avec une fine couche d'un composé à base d'acétoglycérides, puis suremballé sous film de cellophane.

Les fromages obtenus montrent des ouvertures régulières dans la pâte, une texture souple et un agréable goût fruité caractéristique des pâtes pressées cuites ; ainsi, un fromage sphérique de 200 g présente à la coupe de 4 à 6 ouvertures de la grosseur d'une petite noisette dans la pâte.

**Revendications**

1. Procédé de fabrication d'un fromage de poids inférieur à 500 g, présentant dans la pâte des ouvertures obtenues par fermentation propionique, dans lequel on pasteurise, un lait standardisé en matière grasse, on l'ensemence avec des ferments lactiques et au moins une souche de bactéries propioniques, on l'emprésure pour obtenir un caillé et du lactosérum, on découpe et brasse le caillé obtenu, on soutire le lactosérum, on moule et presse le caillé dans les moules, on démoule le fromage, le sale et l'affine, caractérisé en ce que l'on ajoute au lait de fabrication avant emprésurage une quantité efficace pour obtenir une fermentation de lactobacilles de l'espèce _Lactobacillus reuteri_, avant l'affinage l'on entoure ledit fromage avec un film essentiellement perméable aux gaz et l'on effectue l'affinage successivement en cave froide à une température de 8 à 14° C, puis en cave chaude à une température de 18 à 23° C.

2. Procédé selon la revendication 1, caractérisé en ce que l'espèce de _Lactobacillus reuteri_ (EE24) est la souche déposée à la Collection Nationale de Culture de Microorganisme le 24 septembre 1992 sous le numéro I. 1269.

**3.** Procédé selon l'une des revendications 1 ou 2, caractérisé en ce que l'on ajoute au lait de fabrication avant emprésurage une quantité comprise entre $10^4$ et $10^7$ CFU/ml de lait de lactobacilles de l'espèce _Lactobacillus reuteri_.

**4.** Procédé selon l'une quelconque des revendications 1 à 3, caractérisé en ce que le film perméable est constitué de polystyrène, d'une cire animale, végétale, minérale, ou de parafine, ou d'un déviré de corps gras, notamment d'acétoglycérides, ou d'un mélange de plusieurs de ces composés.

**5.** Procédé selon la revendication 1 ou la revendication 4, caractérisé en ce que le film est constitué de polyacétate de vinyle.

**6.** Procédé selon l'une quelconque des revendications 1 à 5, caractérisé en ce que l'épaisseur du film est de 20 à 80 µm.

**7.** Procédé selon l'une quelconque des revendications 1 à 5, caractérisé en ce que l'on effectue l'affinage successivement en cave froide à une température de 8° C à 14° C et une humidité relative de 98 % pendant 8 à 10 jours, puis en cave chaude à une température de 18° C à 23° C et une humidité relative de 85 % pendant 7 à 14 jours.

**8.** Procédé selon l'une quelconque des revendications 1 à 7, caractérisé en ce que l'on effectue l'affinage en cave chaude dans des claies alvéolées pleines.

**9.** Procédé selon l'une quelconque des revendications 1 à 8, caractérisé en ce qu'après l'affinage, on réalise un ressuyage homogène de la surface du fromage.

**10.** Procédé selon la revendication 9, caractérisé en ce que le ressuyage homogène de la surface du fromage est réalisé par passage dudit fromage en cave sèche à une température de 10 à 15° C et une humidité relative de 85 %.

**Claims**

**1.** Process for producing a cheese weighing less than 500 g, the cheese containing holes produced by propionic fermentation, wherein milk having a standardised fat content is pasteurised, seeded with lactic ferments and at least one strain of propionic bacteria, pressed to produce curds and whey, the curds obtained are cut and worked, the whey is drawn off, the curds are moulded and pressed into moulds, and the cheese is demoulded, salted and ripened, characterised in that a quantity of lactobacilli of the species _Lactobacillus reuteri_ sufficient to achieve fermentation is added to the manufacturing milk before pressing, the cheese is surrounded with a substantially gas-permeable film before ripening and ripening is carried out successively in a cold cellar at a temperature of 8 to 14°C, then in a warm cellar at a temperature of 18 to 23°C.

**2.** Process according to claim 1, characterised in that the species of _Lactobacillus reuteri_ (EE24) is the strain deposited at the National Collection of Microorganism Cultures on 24th September 1992 under the number I. 1269.

**3.** Process according to one of claims 1 and 2, characterised in that a quantity of between $10^4$ and $10^7$ CFU/ml of milk of lactobacilli of the species _Lactobacillus reuteri_ is added to the manufacturing milk before pressing.

**4.** Process according to any one of claims 1 to 3, characterised in that the permeable film is of polystyrene, an animal, vegetable, mineral or paraffin wax, or a fat derivative, especially an acetoglyceride derivative, or a mixture of several of these compounds.

**5.** Process according to claim 1 or 4, characterised in that the film consists of polyvinyl acetate.

**6.** Process according to any one of claims 1 to 5, characterised in that the thickness of the film is 20 to 80 µm.

**7.** Process according to any one of claims 1 to 5, characterised in that ripening is effected successively in a cool cellar at a temperature of from 8°C to 14°C and a relative humidity of 98% for 8 to 10 days, then in a warm cellar at a temperature of from 18°C to 23°C and a relative humidity of 85% for 7 to 14 days.

**8.** Process according to any one of claims 1 to 7, characterised in that ripening is effected in a warm cellar in solid cellular baskets.

**9.** Process according to any one of claims 1 to 8, characterised in that, after ripening, the surface of the cheese is homogeneously dried.

**10.** Process according to claim 9, characterised in that the homogeneous drying of the surface of the cheese is carried out by moving the cheese into a dry cellar at a temperature of 10 to 15°C and a relative humidity of 85%.

## Patentansprüche

1. Verfahren zur Herstellung von Käse mit einem Gewicht kleiner als 500gr, der in seiner Masse Öffnungen aufweist, die durch Propion-Fermentation erhalten werden, bei dem man Milch, die bezüglich der Fettmenge standardisiert ist, pasteurisiert, mit Milch-Fermenten und mit mindestens einem Stamm Propion-Bakterien bestreut, sie gerinnen läßt, um dicke Milch und Laktoserum zu erhalten, die erhaltene dicke Milch zerkleinert und verrührt, das Laktoserum umfüllt, die dicke Milch in Formen gießt und preßt und den Käse, den Rückstand und die Veredelungsprodukte herausnimmt, **dadurch gekennzeichnet**, daß man der Prozeß-Milch vor dem Gerinnen eine zum Erhalt einer Fermentation wirksame Menge von Laktobazillen von der Gattung "Lactobacillus reuteri" zusetzt, daß man vor der Veredelung den Käse mit einem Film umgibt, der im wesentlichen für Gas durchlässig ist, und daß man die Veredelung aufeinanderfolgend in einem kalten Raum bei einer Temperatur zwischen 8° und 14° C und dann in einem warmen Raum mit einer Temperatur zwischen 18° und 23° C bewirkt.

2. Verfahren nach Anspruch 1, **dadurch gekennzeichnet**, daß die Gattung "Lactobacillus reuteri" (EE24) der Stamm ist, der in der Collection Nationale de Culture de Microorganisme am 24. September 1992 unter der Nummer I. 1269 hinterlegt worden ist.

3. Verfahren nach Anspruch 1 oder 2, **dadurch gekennzeichnet**, daß man der Prozeß-Milch vor dem Gerinnen eine Menge zwischen $10^4$ und $10^7$ CFU/ml der Lactobazillen-Milch von der Gattung "Lactobacillus reuteri" zusetzt.

4. Verfahren nach einem der Ansprüche 1 bis 3, **dadurch gekennzeichnet**, daß der durchlässige Film aus Polystyrol, einem tierischen, pflanzlichen, mineralen Wachs oder Paraffin oder einem Abkömmling von Fetten, insbesondere von Acetoglyceriden, oder einer Mischung mehrerer dieser Komponenten besteht.

5. Verfahren nach Anspruch 1 oder 4 , **dadurch gekennzeichnet**, daß der Film aus Poly-Vinyl-Acetat besteht.

6. Verfahren nach einem der Ansprüche 1 bis 5, **dadurch gekennzeichnet**, daß die Dicke des Films zwischen 10 und 80 μm liegt.

7. Verfahren nach einem der Ansprüche 1 bis 5, **dadurch gekennzeichnet**, daß man die Veredelung aufeinanderfolgend in einem kalten Raum bei einer Temperatur zwischen 8° und 14° C bei einer relativen Feuchtigkeit von 98% während 8 bis 10 Tage und dann in einem warmen Raum bei einer Temperatur zwischen 18° und 23° C bei einer relativen Feuchtigkeit von 85 % während 7 bis 14 Tage durchführt.

8. Verfahren nach einem der Ansprüche 1 bis 7, **dadurch gekennzeichnet**, daß man die Veredelung im warmen Raum in einem dichten Wabengeflecht durchführt.

9. Verfahren nach einem der Ansprüche 1 bis 8, **dadurch gekennzeichnet**, daß nach der Veredelung ein homogenes Trocknen der Käseoberfläche erfolgt.

10. Verfahren nach Anspruch 9, **dadurch gekennzeichnet**, daß das homogene Trocknen dadurch erfolgt, daß der Käse einen trockenen Raum mit einer Temperatur von 10 bis 15° C und einer relativen Feuchtigkeit von 85 % durchläuft.